Europäisches Patentamt

(19) European Patent Office

Office européen des brevets

(11) Publication number : **0 381 394 B1**

(12) EUROPEAN PATENT SPECIFICATION

(45) Date of publication of patent specification :
07.09.94 Bulletin 94/36

(51) Int. Cl.⁵ : **G11B 7/095**, G11B 7/09

(21) Application number : 90300857.1

(22) Date of filing : 26.01.90

(54) Tracking error detecting apparatus and optical disc recording and/or apparatus including the same.

(30) Priority : 03.02.89 JP 25567/89

(43) Date of publication of application :
08.08.90 Bulletin 90/32

(45) Publication of the grant of the patent :
07.09.94 Bulletin 94/36

(84) Designated Contracting States :
DE FR GB

(56) References cited :
EP-A- 0 183 435
EP-A- 0 188 088
DE-A-37 239 23

(73) Proprietor : SONY CORPORATION
7-35 Kitashinagawa 6-chome
Shinagawa-ku
Tokyo 141 (JP)

(72) Inventor : Hasimoto, Minoru, c/o Patents
Division
Sony Corporation, 6-7-35 Kitashinagawa
Shinagawa-ku, Tokyo 141 (JP)
Inventor : Oinoue, Hiroshi, c/o Patents Division
Sony Corporation, 6-7-35 Kitashinagawa
Shinagawa-ku, Tokyo 141 (JP)
Inventor : Tamura, Takeo, c/o Patents Division
Sony Corporation, 6-7-35 Kitashinagawa
Shinagawa-ku, Tokyo 141 (JP)

(74) Representative : Thomas, Christopher Hugo et
al
D. Young & Co,
21 New Fetter Lane
London EC4A 1DA (GB)

Jouve, 18, rue Saint-Denis, 75001 PARIS

## Description

This invention relates to tracking error detection apparatus for optical disc recording and/or reproducing apparatus, and to such recording and/or reproducing apparatus.

In an optical disc recording and/or reproducing apparatus in which a light beam is irradiated on an optical disc by an optical pick-up to read data signals from a track on the disc, it is necessary for the light beam irradiated by the optical pick-up on the optical disc to be converged on the signal recording surface of the disc (focusing direction) and to be made to follow the target track (tracking direction). Hence, focusing error signals and tracking error signals are generated from the detection output of the optical pick-up for driving a so-called biaxial actuator arranged to shift an objective lens directing the light beam onto the signal recording surface, to perform focusing servo and tracking servo control operations.

As the method for detecting tracking error in such apparatus, there are known such methods as a three-beam method, a push-pull method and a wobbling method.

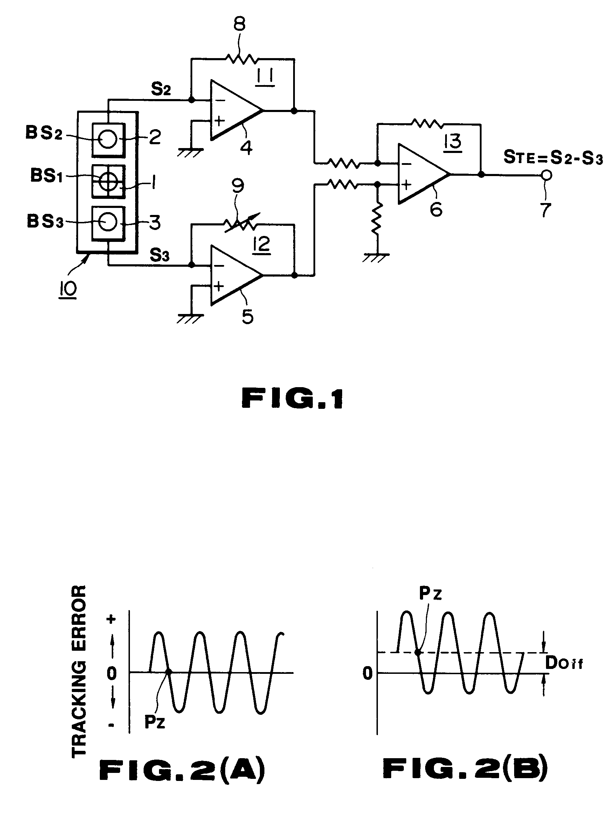

Figure 1 shows the basic construction of a tracking error detection apparatus for a three-beam system. This apparatus includes, as a photodetector unit 10 of an optical pick-up detecting the return light beam from the optical disc, a main light beam detector 1 at a position of a main light sport BS1 formed by a data read-out main light beam, and a pair of auxiliary light beam detectors 2 and 3 at the positions of auxiliary light spots BS2 and BS3 formed by two auxiliary light beams for tracking error detection.

The output detection currents obtained at the auxiliary light beam detectors 2 and 3 as the output detection signals S2 and S3 by the two auxiliary light beams by the photodetector unit 10 are converted into voltage signals by means of current-to-voltage converters 11 and 12, formed by respective operational amplifiers 4 and 5, so as to be supplied to a signal subtraction circuit 13, formed by an operational amplifier 6. The signal subtraction circuit 13 supplies the difference S2 - S3 of the output detection signals S2 and S3 of the auxiliary light beams, at a signal output terminal 7 as a tracking error signal STE.

When the light spot is moved to traverse a track on the optical disc, the tracking error signal STE obtained at the signal output terminal 7, proves to be the traverse signal as shown in Figure 2(A). On closing a tracking servo loop of the optical disc recording and/or reproducing apparatus, the tracking servo loop is formed so that the signal STE is drawn towards a zero level point Pz.

In practice, however, an offset $D_{off}$ is produced in the traverse signal, obtained as the tracking error signal STE produced at the output terminal 7, as shown in Figure 2(B), as a result of the deviation in the split light volume ratio between the (+) first order diffracted light and the (-) first order diffracted light, produced by a diffraction grating of an optical system in the optical pick-up, or the difference in the photoelectric conversion sensitivities of the auxiliary sensors 2 and 3. The offset $D_{off}$ of the traverse signal proves to be an offset of the tracking servo loop, such that the tracking by the main beam occurs off the target track on the optical disc.

With this tracking error detection apparatus, for eliminating the above offset $D_{off}$, one of feedback resistors 8 and 9, such as a resistor 9, of the operational amplifiers 4 and 5 making up the current-to-voltage converters 11 and 12, arranged for converting the output detection currents obtained at the auxiliary detectors 2 and 3 as the output detection signals S1 and S2 of the two auxiliary light beams, into the corresponding voltages, is formed as a variable resistor, so as to render the conversion constants of the current-to-voltage converting circuits 12 adjustable, by way of performing a balancing adjustment. However, this apparatus has the inconvenience that considerable time and labour are involved in the operation of the balancing adjustment.

The wobbling system for detecting the envelope of the RF level to dispense with the balancing adjustment is also unsatisfactory for practical application because of the highly complex system organisation.

DE-A-3723923 discloses a tracking error detection apparatus wherein a tracking error signal is produced by taking the difference between the output signals from a pair of light beam detectors. Means are provided for switching the dc level of one of the signals from the light beam detectors step-wise. Switching of the dc level is controlled by a microprocessor. The dc level is adjusted until the reproduced data signal, integrated by a capacitor, reaches a maximum.

According to the present invention there is provided a tracking error detection apparatus for an optical disc recording and/or reproducing apparatus, the apparatus comprising:

tracking error signal forming means for forming a tracking error signal by taking the difference between detection output signals from at least a pair of light beam detectors provided in an optical pick-up;

dc component switching means for switching the dc level of the output detection signal of one of said light beam detectors step-wise; and

offset eliminating means for eliminating an offset of said tracking error signal by controlling said dc component switching means to effect switching of the detection output signal of said one of said light beam detectors step-wise, characterised in that a tracking servo performed on the basis of the output signal from said tracking error signal forming means is off in an offset adjustment mode, so that the tracking error signal is a traverse signal indicating a relative movement between a light beam from said optical pick-up and a track on said disc, and in that the offset eliminating means comprises period detection means for detecting whether the period of said traverse signal is not more than a predetermined value, the offset eliminating means being arranged to control switching of said detection output signal of said one of said light beam detectors step-wise in response to the average level of said traverse signal only when the detection output from said period detection means indicates that the period of said traverse signal is not more than said predetermined value.

Thus, in an embodiment of the present invention, it is detected, during the tracking servo turn-off period, that the period of a traverse signal, indicating the relative movement between the light beam produced by the optical pick-up of the optical disc recording and/or reproducing apparatus and the track on the disc, is lower than a predetermined level, for effecting a step-wise switching of the dc component of the output detection signal of one of the light beam detectors arranged to produce a tracking error signal, so as to eliminate the dc offset of the tracking error signal.

The invention will now be described by way of example with reference to the accompanying drawings, throughout which like parts are referred to by like references, and in which:

Figure 1 is a circuit diagram showing a previously proposed tracking error detection apparatus of an optical disc recording and/or reproducing apparatus;

Figure 2 shows waveform diagrams illustrating the operation of the apparatus of Figure 1;

Figure 3 is a circuit diagram of a first embodiment of tracking error detection apparatus according to the present invention of an optical disc recording and/or reproducing apparatus;

Figure 4 is a flow chart of a control operation of the first embodiment;

Figure 5 shows waveform diagrams of a traverse signal and a low-pass filter output;

Figure 6 is a diagrammatic view showing the status of a light spot on a track, corresponding to the traverse signal of Figure 5;

Figure 7 is a circuit diagram of a second embodiment of tracking error detection apparatus according to the present invention of an optical disc recording and/or reproducing apparatus.

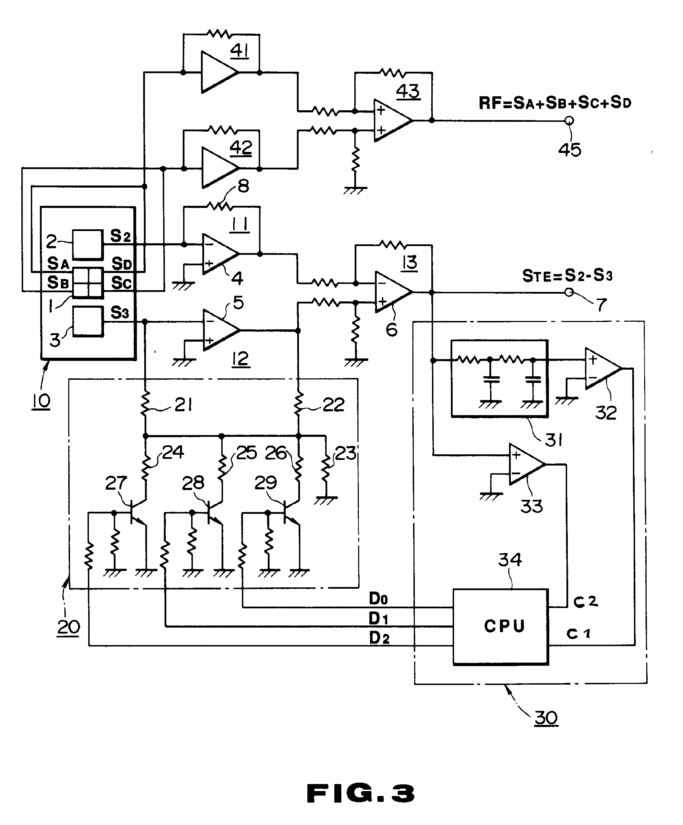

Figure 3 shows the first embodiment, the basic form of which is the same as that of Figure 1.

The first embodiment includes a feedback resistor circuit 20 in a feedback path of an operational amplifier 5 forming a current-to-voltage converter 12 for converting into a voltage an output detection current obtained at an auxiliary light beam detector 3 as an output detection signal S3 of one of two auxiliary light beams produced by a photodetector unit 10 of the optical pick-up for tracking error detection. The feedback resistor circuit 20 is arranged to switch the feedback step-wise.

The feedback resistor circuit 20 is formed by resistors 21 and 22 connected in series between an inverting input and an output of the operational amplifier 5, a resistor 23 connected between a junction mid-point of the resistors 21 and 22 and earth, and resistors 24, 25 and 26 connected in parallel with the resistor 23 by means of switching transistors 27, 28 and 29.

The current-to-voltage converting circuit 12 is so arranged that the voltage dividing ratio is switched step-wise by the turning on and off of the switching transistors 27, 28 and 29 of the feedback resistor circuit 20, to switch the feedback of the operational amplifier 5 to render the conversion gain variable.

In the first embodiment, a controller 30 for effecting on/off switching control of the transistors 27, 28 and 29 is arranged in the following manner.

The controller 30 is formed by a first comparator 32 fed with a tracking error signal STE by way of a low-pass filter 31, a second comparator 33 fed directly with the tracking error signal STE, and a microprocessor 34 effecting on/off control of the transistors 27, 28 and 29 of the feedback resistor circuit 20 on the basis of the outputs from the comparators 32 and 33. The tracking error signal STE is produced at the signal output terminal 7 from a signal subtraction circuit 13, to which a detection output current obtained at each of auxiliary light beam detectors 2 and 3 as detection output signals S2 and S3 of the two auxiliary light beams by the photodetector unit 10 of the optical pick-up is supplied, after conversion into voltage signals by current-to-voltage conversion circuits 11 and 12. The microprocessor 34 is one in which is provided as, for example, a system controller, in the optical disc recording and/or reproducing apparatus.

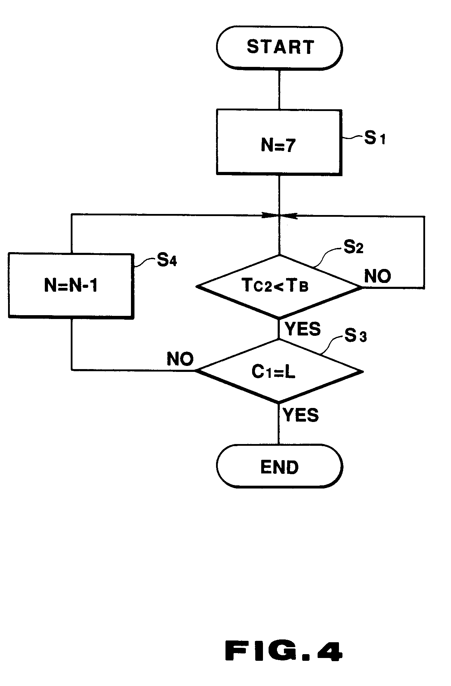

When the offset adjustment mode of the tracking error detection apparatus is specified, the microprocessor 34 turns the tracking servo loop off to enable the traverse signal to be generated from the subtraction circuit 13 as the tracking error signal STE, to start the control operation for the offset adjustment mode shown in the flow chart of Figure 4.

The comparator 32 compares the average level of the traverse signal, supplied by way of the low-pass filter 31, with a zero level 0V dc, to transmit to the microprocessor 34 a comparison output signal C1 which goes high when the average level of the traverse signal is higher than the zero level. The comparator 33 directly compares the traverse signal level with the zero level to transmit to the microprocessor 34 a comparison output pulse C2 having a pulse width corresponding to the period TC2 of the traverse signal.

When the control operation of the offset adjustment mode is initiated, the microprocessor 34 sets a control variable N to seven at a first step S1 by way of an initializing operation to supply three-bit control

data $D_2$ = 1(L), $D_1$ = 1 and $D_0$ = 1 to the transistors 27, 28 and 29 of the feedback resistor circuit 20 so as to turn the transistors 27 to 29 off, to control the conversion gain of the current-to-voltage circuit 12 to a minimum state. The microprocessor 34 then proceeds to the second step S2.

In this second step S2, the microprocessor 34 determines, on the basis of the comparison output signal C2 from the comparator 33, whether the period TC2 of the traverse signal is less than a predetermined value TB. If the decision at step S2 is NO, that is if the period TC2 of the traverse signal is larger than the predetermined value TB, the microprocessor 34 repeats the decision operation at the step S2. When the decision at step S2 becomes YES, that is when the period TC2 of the traverse signal becomes smaller than the value TB, the microprocessor 34 proceeds to the decision operation at the next step S3.

At the third step S3, it is decided whether the comparison output signal C1 from the comparator 32 is at the logically low level (L). When the decision at the third step S3 is NO, that is when the comparison output signal C1 from the comparator 32 is at the logically high level (H), the microprocessor 34 proceeds to the fourth step S4 to decrement the control variable N (N=N-1) to supply three-bit control data $D_2$ = 1, $D_1$ = 1, $D_0$ = 0(H) corresponding to the control variable N to the transistors 27, 28 and 29 to turn the transistor 29 on, to control the conversion gain of the current-to-voltage converter 12 so as to be one step higher than the minimum value. The microprocessor 34 then reverts to the decision operation at step S2.

By repetition of the control operation from the second step S2 to the fourth step S4 by the microprocessor 34, the conversion gain of the current-to-voltage converter 12 is raised one step each time, so that the average level of the traverse signal supplied to the comparator 32 by way of the low-pass filter 31 is also raised step-wise.

Table 1 shows the relation between the control variable N and the three-bit control data $D_2$, $D_1$ and $D_0$.

Table 1

| N | D2 | D1 | D0 |
|---|----|----|----|
| 7 | L | L | L |
| 6 | L | L | H |
| 5 | L | H | L |
| 4 | L | H | H |
| 3 | H | L | L |
| 2 | H | L | H |
| 1 | H | H | L |
| 0 | H | H | H |

When the result of the decision at step S3 becomes YES, that is when the comparison output signal C1 from the comparator 32 is at the logically low level, the microprocessor 34 fetches the three-bit control data D2, D1 and D0 corresponding to the control variable N at this time point into a control memory, not shown, to terminate the control operation of the offset adjustment mode.

At a time point when the comparison output signal D1 of the comparator 32 comparing the average level of the traverse signal with the zero level is changed from H to L, the average level of the traverse signal is close to the zero level. The three-bit control data D2, D1, and D0 corresponding to the control variable N at this time point are transmitted to the transistors 27, 28 and 29 so as to turn the transistor 29 on and off to control the conversion variable of the current-to-voltage converter 12 to supply the tracking error signal STE free of the dc offset from the subtraction circuit 13 to the output terminal 7.

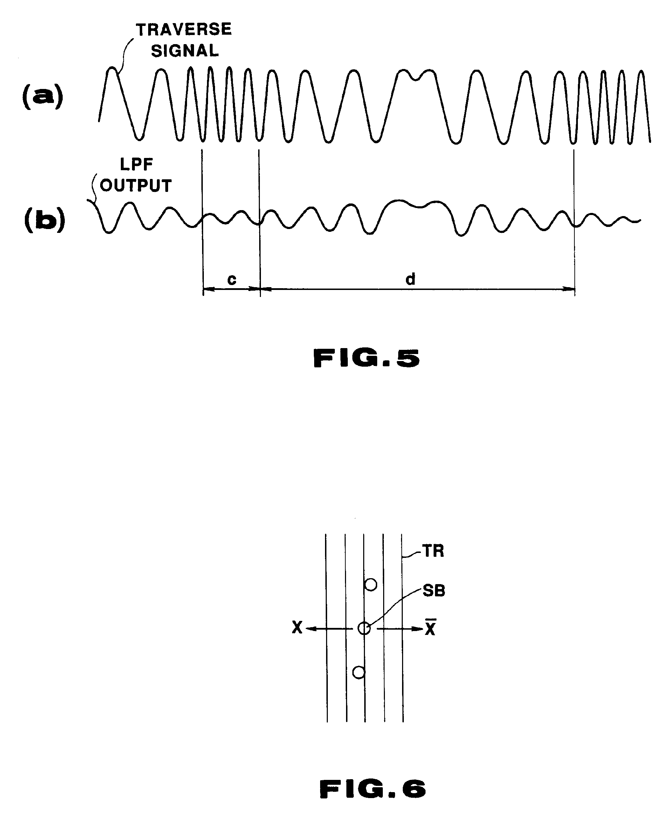

Since the rotation of the optical disc is accompanied by an offset, the traverse signal obtained as the tracking error signal STE from the subtraction circuit 13 during the offset adjustment mode has a waveform as shown in Figure 5(a), as a result of the offset. When the beam spot SB traverses a track TR, with a substantially constant rotational angle of the optical disc, as shown for example in Figure 6, the above waveform exhibits oscillations in the directions shown by X or $\overline{X}$ in timed relation with the period of rotation, as a result of the movement of the optical disc due to the above-mentioned offset, such that the amplitude becomes zero at the reversal points and becomes a maximum halfway. When the traverse signal having such a waveform is passed through the low-pass filter 31, ripples are increased in a lower frequency range d, as shown in Figure 5(b). For reducing the ripples, it is sufficient if the cut-off frequency of the low-pass filter 31 is set so as to be sufficiently lower than the traverse signal frequency. However, if the cut-off frequency of the low-pass filter 31 is lowered, the response is retarded, so that the offset adjustment becomes a time-consuming operation.

With the first embodiment, the low frequency range d, having the period TC2 of the traverse signal larger than the predetermined value TB, is sensed by the microprocessor 34, on the basis of the comparison output pulse C2 from the comparator 33, and the decision operation of the comparison output signal C1 by the comparator 32 is inhibited for the range d accompanied by the ripples, thus improving the adjustment accuracy. Conversely, the decision operation of the comparison output signal C1 by the comparator 32 is allowed to occur for a range c, for which the traverse signal period TC2 is less than the predetermined value TB, so that an automatic offset adjustment may be performed with high accuracy and efficiency.

With the above described tracking error detection apparatus, a so-called four-segment photo-detector is employed as a main light beam detector 1 for detecting the main light beam by the photodetector unit 10 of the optical pick-up. Output detection signals SA, SB, SC and SD for the main light beam by the detector 1 are transmitted to a signal summation circuit 43 by way of current-to-voltage converters 41 and 42 arranged to convert the output detection current from the four-segment detector into a corresponding voltage signal, and the output summation signal RF=SA+SB+SC+SD from the signal summation circuit 43 is supplied as the reproduction RF signal at a signal output terminal 45.

The comparator 33 may also be so arranged that a comparison output signal C2 having a pulse width corresponding to the period C2 of the traverse signal may be formed from a so-called mirror signal from a reproduction RF signal output from the output terminal 45 as a summation output signal RF by the summation circuit 43.

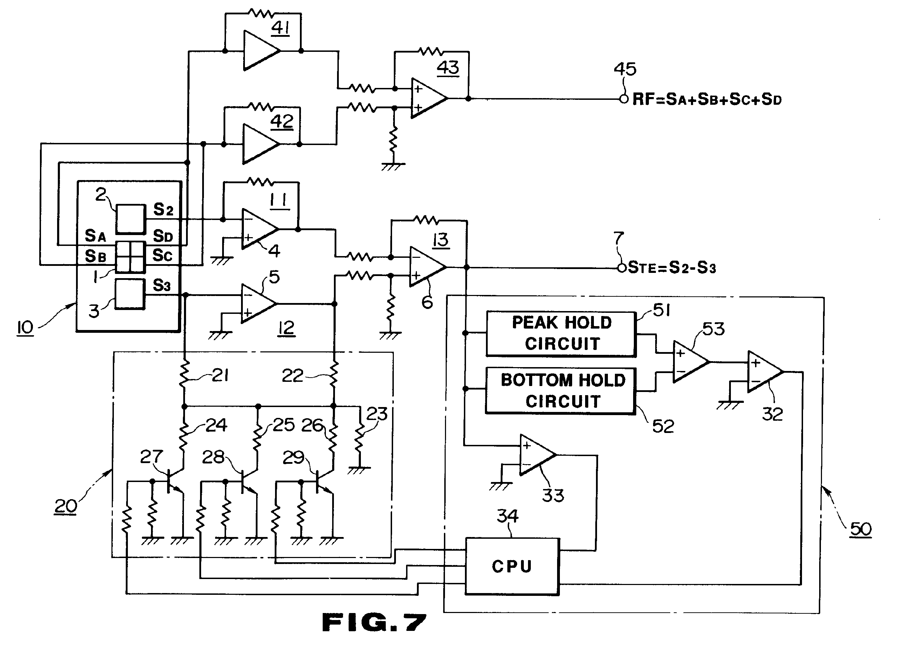

In the second embodiment, shown in Figure 7, an automatic offset adjustment may also be performed with high accuracy and efficiency comparable with the first embodiment when a controller 50 formed by a peak-hold circuit 51 and a bottom-hold circuit 52, in substitution for the low-pass filter of the first embodiment, for detecting the highest and the lowest levels of the traverse signal obtained as the tracking error signal STE from the subtraction circuit 13, and a comparator 53 for comparing the held outputs of the hold circuits 51 and 52, that is, the highest signal level and the lowest signal level of the traverse signal, is employed to perform an on/off control of the transistors 27, 28 and 29 and the transistor 29 of the feedback resistor circuit 20 to control the conversion gain of the current-to-voltage converter 12.

Thus, in the embodiments, when the tracking servo is off, an output signal from a period detection means for detecting whether or not the period of the traverse signal indicating the relative movement between a light beam obtained from the optical pick-up of the optical disc recording and/or reproducing apparatus and a track on the disc is not more than a predetermined value is used to control dc component switching means only when the period of the traverse signal is below the predetermined value for switching the dc component of the output detection signal of one of the light beam detectors forming the tracking error signal step-wise to eliminate the dc offset of the tracking error signal, so that an automatic offset adjustment may be performed with high accuracy and efficiency. That is, the detection and processing of the dc component of the traverse signal is inhibited for a range of the traverse signal accompanied by large ripples and having the traverse signal period larger than the predetermined value for improving the adjustment accuracy. On the other hand, the detection and processing of the dc component of the traverse signal is permitted to occur for the range having the higher frequency and having the traverse signal period less than a predetermined value, so that the offset adjustment may be performed with high accuracy and efficiency.

## Claims

1. A tracking error detection apparatus for an optical disc recording and/or reproducing apparatus, the apparatus comprising:
   tracking error signal forming means (13) for forming a tracking error signal by taking the difference between detection output signals from at least a pair of light beam detectors (2, 3) provided in an optical pick-up;
   dc component switching means (27 to 29) for switching the dc level of the output detection signal of one (3) of said light beam detectors (2, 3) step-wise; and
   offset eliminating means (30) for eliminating an offset of said tracking error signal by controlling said dc component switching means (27 to 29) to effect switching of the detection output signal of said one (3) of said light beam detectors (2, 3) step-wise, characterised in that a tracking servo performed on the basis of the output signal from said tracking error signal forming means (13) is off in an offset adjustment mode, so that the tracking error signal is a traverse signal indicating a relative movement between a light beam from said optical pick-up and a track on said disc, and in that the offset eliminating means (30) comprises period detection means (33, 34) for detecting whether the period (TC2) of said traverse signal is not more than a predetermined value (TB), the offset eliminating means (30) being arranged to control switching of said detection output signal of said one (3) of said light beam detectors (2, 3) step-wise in response to the average level of said traverse signal only when the detection output from said period detection means (33, 34) indicates that the period of said traverse signal is not more than said predetermined value.

2. Apparatus according to claim 1 wherein said offset eliminating means (30) includes average level sensing means (31; 51 to 53) for sensing the average level of said traverse signal, comparator means (32) for comparing the detection output of said average level sensing means (31) and a reference level, and control means (34) for performing switching control of said dc component switching means (27 to 29) when the comparison output of said comparator means (32) indicates that said average level is higher than said reference level.

3. Apparatus according to claim 2 wherein said control means (34) performs switching control of said dc component switching means (27 to 29) so that the dc component of the output detection signal of said one (3) of the light beam detectors (2, 3) is raised one step each time when said average level is higher than said reference level, said control means (34) continuing said switching control until the comparison output from said comparator means (32) indicates that said average level is equal to said reference level.

4. Apparatus according to claim 3 wherein said control means (34) includes memory means for storage of switching control data at the time when said average becomes equal to said reference level.

5. Apparatus according to claim 2 wherein said average level sensing means includes peak-holding means (51) for holding a peak value of said traverse signal, bottom-holding means (52) for holding a bottom value of said traverse signal, and subtraction means (53) for deriving a difference between the outputs of said peak-holding means (51) and said bottom-holding means (52).

6. An optical disc recording and/or reproducing apparatus including a tracking error detection apparatus as claimed in any preceding claim, the recording and/or reproducing apparatus comprising: an optical pick-up having an actuator for shifting an objective lens in both a focusing direction and a tracking direction, and tracking servo means for moving said objective lens in the tracking direction on the basis of the output signal from said tracking error signal forming means (13) to effect a tracking servo, wherein said dc component switching means (27 to 29) is arranged for switching the gain of an amplifier stage (5) step-wise, said amplifier stage (5) being arranged for amplifying the detection output signal of said one (3) of said light beam detectors (2, 3) and supplying the amplified signal to said tracking error signal forming means (13), and wherein said offset eliminating means (30) is arranged to produce compensation data ($D_0$, $D_1$, $D_2$) for controlling said dc component switching means (27 to 29) to effect switching of the gain of said amplifier stage (5) step-wise to switch the dc level of the detection output signal, and wherein, when said tracking servo means is on, tracking servo is performed by said tracking servo means on the basis of said compensation data ($D_0$, $D_1$, $D_2$) produced by said offset eliminating means (30).

**Patentansprüche**

1. Vorrichtung zum Erfassen von Spurfolgefehlern für ein Aufzeichnungs- und/oder Wiedergabegerät von optischen Platten mit:
   einer ein Spurfolgefehlersignal bildenden Einrichtung (13) zur Bildung eines Spurfolgefehlersignals mittels der Differenz zwischen Erfassungsausgangsignalen von mindestens einem Paar von Lichtstrahldetektoren (2,3) in einem optischen Aufnehmer, einer einen Gleichanteil schaltenden Einrichtung (27-29) zum schrittweisen Schalten des Gleichanteils des Ausgangserfassungssignals von einem (3) der Lichtstrahldetektoren (2,3); und
   einer Offset-Beseitigungseinrichtung (30) zur Beseitigung eines Offsets des Spurfolgefehlersignals durch Steuern der den Gleichanteil schaltenden Einrichtung (27-29) zum Bewirken eines schrittweisen Schaltens des Erfassungsausgangssignals von einem (3) der Lichtstrahldetektoren (2,3),
   dadurch **gekennzeichnet**,
   daß eine Spurfolgeservoeinrichtung, die abhängig von den Ausgangssignalen der das Spurfolgefehlersignal formenden Einrichtung (13) arbeitet, in einer Offset-Einstellungsbetriebsart auf AUS gestellt ist, so daß das Spurfolgefehlersignal ein Transversalsignal ist, das eine Relativbewegung zwischen einem Lichtstrahl des optischen Aufnehmers und einer Spur auf der Platte anzeigt, und dadurch, daß die Offset-Beseitigungseinrichtung (30) eine periodenerfassende Einrichtung (33,34) zum Erfassen, ob die Periode (TC2) des Transversalsignals nicht größer als ein vorbestimmter Wert (TB) ist, aufweist, wobei die Offset-Beseitigungseinrichtung (30) das schrittweise Schalten des Detektionsausgangssignales von einem (3) der Lichtstrahldetektoren (2,3) abhängig von dem durchschnittlichen Pegel des Transversalsignals nur steuert, wenn das Erfassungsausgangssignal der periodenerfassenden Einrichtung (33,34) anzeigt, daß die Periode des Transversalsignals nicht größer als der vorbestimmte Wert ist.

2. Vorrichtung nach Anspruch, bei der die Offset-Beseitigungseinrichtung (30) eine Durchschnittspegel-Sensoreinrichtung (31;51-53) zum Abfühlen des Durchschnittspegel des Transversalsignals, eine Komparatoreinrichtung (32) zum Vergleichen des Erfassungsausgangssignals der Durchschnittspegelsensoren (31) mit einem Referenzpegel und eine Steuereinrichtung (34) zur Schaltsteuerung der den Gleichanteil schaltenden Einrichtung (27-29) aufweist, wenn das Vergleichsausgangssignal der Komparatoreinrichtung (32) anzeigt, daß der Durchschnittspegel höher ist als der Referenzpegel.

3. Vorrichtung nach Anspruch 2, bei der die Steuereinrichtung (34) das Schalten der den Gleichanteil schaltenden Einrichtung (27-29) so steuert, daß der Gleichanteil des Ausgangserfassungssignals von einem (3) der Lichtstrahldetektoren (2,3) jedesmal um eine Stufe erhöht wird, wenn der Durchschnittspegel größer als der Referenzpegel ist, wobei die Steuereinrichtung (34) die Schaltsteuerung so lange weiterführt, bis das Vergleichsausgangssignal der Komparatoreinrichtung (32) anzeigt, daß der Durchschnittspegel genauso groß ist wie der Referenzpegel.

4. Vorrichtung nach Anspruch 3, bei der die Steuereinrichtung (34) eine Speichereinrichtung zum Speichern von Schaltsteuerdaten zu der Zeit, zu der der Durchschnittspegel genauso groß wie der Referenzpegel wird, aufweist.

5. Vorrichtung nach Anspruch 2, bei der die Durchschnittspegel-Sensoreinrichtung eine Spitzenwerthalteeinrichtung (51) zum Halten eines Spitzenwertes des Transversalsignals, eine Tiefpunkthalteeinrichtung (52) zum Halten eines Tiefpunktwerts des Transveralsignals, und eine Subtraktionseinrichtung (53) zur Bildung einer Differenz zwischen den Ausgangssignalen der Spitzenwerthalteeinrichtung (51) und der Tiefpunkthalteeinrichtung (52) aufweist.

6. Vorrichtung zur Aufzeichnung und Wiedergabe von optischen Platten aufweisend eine Vorrichtung zum Feststellen von Spurfolgefehlern nach einem der vorhergehenden Ansprüche, mit: einem optischen Aufnehmer, der einen Aktuator zum Verschieben einer Objektivlinse sowohl in Fokussierungsrichtung als auch in Spurfolgerichtung aufweist, und einer Spurfolgeservoeinrichtung zum Bewegen der Objektivlinse in Spurfolgerichtung abhängig von dem Ausgangssignal der das Spurfolgefehlersignal bildenden Einrichtung (13) zur Durchführung einer Spurfolgeregelung, bei der die den Gleichanteil schaltende Einrichtung (27-29) schrittweise die Verstärkung einer Verstärkerstufe (5) schaltet, wobei die Verstärkerstufe (5) das Erfassungsausgangssignal von einem (3) der Lichtstrahldetektoren (2,3) verstärkt und das verstärkte Signal an die das Spurfolgefehlersignal bildende Einrichtung (13) liefert, und bei der die Offset-Beseitigungseinrichtung (30) Kompensationsdaten ($D_0,D_1,D_2$) zur Steuerung der den Gleichanteil schaltenden Einrichtung (27-29) zum schrittweisen Schalten der Verstärkung der Verstärkerstufe (5) zum Schalten des Gleichpegels des Erfassungsausgangssignals erstellt, und bei der, wenn die Spurfolgeservoeinrichtung auf EIN geschaltet sind, die Spurfolgeservoeinrichtung eine Spurfolgeregelung abhängig von den Kompensationsdaten ($D_0,D_1,D_2$) durchführt, die durch die Offset-Beseitigungseinrichtung (30) erstellt werden.

**Revendications**

1. Appareil de détection d'erreur de suivi de piste pour un appareil d'enregistrement et/ou de reproduction à disque optique, l'appareil comprenant :
   un dispositif de formation d'un signal d'erreur de suivi de piste (13) pour former un signal d'erreur de suivi de piste en prenant la différence entre des signaux de sortie de détection d'au moins une paire de détecteurs de faisceau de lumière (2, 3) placés dans une tête optique ;
   un dispositif de commutation de composante à courant continu (27 à 29) pour commuter le niveau de courant continu du signal de détection de sortie d'un (3) desdits détecteurs de faisceau de lumière (2, 3) par palier; et
   un dispositif d'élimination de décalage (30) pour éliminer un décalage dudit signal d'erreur de suivi de piste en commandant ledit dispositif de commutation de composante à courant continu (27 à 29) pour effectuer une commutation du signal de sortie de détection d'un (3) desdits détecteurs de faisceau de lumière (2, 3) par palier, caractérisé en ce qu'un asservissement de suivi de piste réalisé sur la base du signal de sortie par ledit dispositif de formation de signal d'erreur de suivi de piste (13) est arrêté dans un mode de réglage de décalage, de sorte que le signal d'erreur de suivi de piste est un signal transversal indiquant un déplacement relatif entre un faisceau de lumière de ladite tête optique et une piste sur ledit disque, et en ce que le dispositif d'élimination de décalage (30) comprend un dispositif de détection de période (33, 34) pour détecter si la période (TC2) dudit signal transversal n'est pas supérieure à une valeur prédéterminée (TB), le dispositif d'élimination de décalage (30) étant disposé pour commander une commutation dudit signal de sortie de détection d'un (3) desdits détecteurs de faisceau de lumière (2, 3) par palier, en réponse au niveau moyen dudit signal transversal seulement lorsque la sortie de détection dudit dispositif de détection de période (33, 34) indique que la période dudit signal transversal n'est pas supérieure à ladite valeur prédéterminée.

2. Appareil selon la revendication 1 dans lequel ledit dispositif d'élimination de décalage (30) comprend un dispositif de détection de niveau moyen (31 ; 51 à 53) pour détecter le niveau moyen dudit signal transversal, un dispositif comparateur (32) pour comparer la sortie de détection dudit dispositif de détection de niveau moyen (31) et un niveau de référence, et un dispositif de commande (34) pour réaliser une commande de commutation dudit dispositif de commutation de composante à courant continu (27 à 29) lorsque la sortie de comparaison dudit dispositif comparateur (32) indique que ledit niveau moyen est supérieur audit niveau de référence.

3. Appareil selon la revendication 2 dans lequel ledit dispositif de commande (34) réalise une commande de commutation dudit dispositif de commutation de composante à courant continu (27 à 29) de sorte que la composante à courant continu du signal de détection de sortie d'un (3) desdits détecteurs de faisceau de lumière (2, 3) est élevée d'un palier à chaque fois lorsque ledit niveau moyen est plus élevé que ledit niveau de référence, ledit dispositif de commande (34) continuant ladite commande de commutation jusqu'à ce que la sortie de comparaison dudit dispositif comparateur (32) indique que ledit niveau moyen est égal audit niveau de référence.

4. Appareil selon la revendication 3 dans lequel ledit dispositif de commande (34) comprend un dispositif mémoire pour un stockage des données de commande de commutation à l'instant où ladite moyenne devient égale audit niveau de référence.

5. Appareil selon la revendication 2 dans lequel ledit dispositif de détection de niveau moyen comprend des dispositifs de maintien de crête (51) pour maintenir une valeur de crête dudit signal transversal, un dispositif de maintien de creux (52) pour maintenir une valeur de creux dudit signal transversal, et un dispositif de soustraction (53) pour dériver une différence entre les sorties dudit dispositif de maintien de crête (51) et dudit dispositif de maintien de creux (52).

6. Appareil d'enregistrement et/ou de reproduction à disque optique comprenant un appareil de détection d'erreur de suivi de piste selon l'une quelconque des revendications précédentes, l'appareil d'enregistrement et/ou de reproduction comprenant :

une tête optique ayant un actionneur pour décaler une lentille d'objectif à la fois dans une direction de focalisation et dans une direction de suivi de piste, et un dispositif d'asservissement de suivi de piste pour déplacer ladite lentille d'objectif dans la direction de suivi de piste sur la base du signal de sortie dudit dispositif de formation de signal d'erreur de suivi de piste (13) pour effectuer un asservissement de suivi de piste, dans lequel ledit dispositif de commutation de composante à courant continu (27 à 29) est disposé pour ccmmuter le gain d'un étage amplificateur (5) par palier, ledit étage amplificateur (5) étant disposé pour amplifier le signal de sortie de détection d'un (3) desdits détecteurs de faisceau de lumière (2, 3) et pour fournir le signal amplifié audit dispositif de formation de signal d'erreur de suivi de piste (13), et dans lequel ledit dispositif d'élimination de décalage (30) est disposé pour produire des données de compensation ($D_0$, $D_1$, $D_2$) pour commander ledit dispositif de commutation de composante à courant continu (27 à 29) pour effectuer une commutation du gain dudit étage amplificateur (5) par palier pour commuter le niveau de courant continu du signal de sortie de détection, et dans lequel, lorsque ledit dispositif d'asservissement de suivi de piste est en fonctionnement, un asservissement de suivi de piste est réalisé par ledit dispositif asservissement de piste sur la base desdites données de compensation ($D_0$, $D_1$, $D_2$) produites par ledit dispositif d'élimination de décalage (30).

**FIG.1**

**FIG.2(A)**

**FIG.2(B)**

$$RF = S_A + S_B + S_C + S_D$$

$$S_{TE} = S_2 - S_3$$

# FIG.3

START

N=7 — S1

N=N-1 — S4

$T_{C2} < T_B$ — S2

NO

YES

$C_1 = L$ — S3

NO

YES

END

FIG.4

TRAVERSE
SIGNAL

**(a)**

LPF
OUTPUT

**(b)**

c

d

# FIG.5

TR

SB

X ← → X̄

# FIG.6

**FIG. 7**

$RF = S_A + S_B + S_C + S_D$

$STE = S_2 - S_3$

PEAK HOLD CIRCUIT

BOTTOM HOLD CIRCUIT

CPU